Europäisches Patentamt

European Patent Office

Office européen des brevets

(11) Veröffentlichungsnummer: **0 084 869 B1**

(19)

## (12) EUROPÄISCHE PATENTSCHRIFT

(45) Veröffentlichungstag der Patentschrift:
21.08.85

(21) Anmeldenummer: 83100506.1

(22) Anmeldetag: 21.01.83

(51) Int. Cl.⁴: **C 09 K 5/04**

(54) Arbeitsmedium für Absorptionswärmepumpen.

(30) Priorität: 26.01.82 DE 3202377

(43) Veröffentlichungstag der Anmeldung:
03.08.83 Patentblatt 83/31

(45) Bekanntmachung des Hinweises auf die Patenterteilung:
21.08.85 Patentblatt 85/34

(84) Benannte Vertragsstaaten:
AT BE CH DE FR IT LI LU NL SE

(56) Entgegenhaltungen:
EP - A - 0 030 127
EP - A - 0 062 516
FR - A - 2 440 393

(73) Patentinhaber: **HOECHST AKTIENGESELLSCHAFT,**
**Postfach 80 03 20, D-6230 Frankfurt am Main 80 (DE)**

(72) Erfinder: **Hoffmann, Bernd, Völklinger Weg 64,**
**D-6000 Frankfurt am Main 71 (DE)**
Erfinder: **Scholten, Wolfgang, Kantstrasse 26,**
**D-6238 Hofheim am Taunus (DE)**
Erfinder: **Naplerski, Klaus, Hansaallee 125,**
**D-6000 Frankfurt am Main (DE)**

**Beschreibung**

Die vorliegende Erfindung bezieht sich auf ein Arbeitsmedium, das Difluorchlormethan enthält und in einer Wärmepumpe vom Absorptionstyp zur Erzeugung von Kälte oder Wärme eingesetzt werden kann.

Die Verwendung von Wärmepumpen für Kühl- oder Heizzwecke ist seit langem bekannt. Während anfangs elektrisch angetriebene Kompressionsmaschinen zur Erzeugung von Kälte im Vordergrund standen, gewinnen in letzter Zeit Heizwärmepumpen an Interesse, die in der Lage sind, Energie einzusparen. Dabei können im Prinzip sowohl Kompressions- als auch Sorptions-Wärmepumpen eingesetzt werden. Sorptions-Wärmepumpen haben aber gegenüber elektrisch angetriebenen Kompressions-Wärmepumpen einige Vorteile, im wesentlichen die Geräuscharmut, geringerer Verschleiß, da kaum mechanisch angetriebene Teile vorhanden sind, geringerer Wartungsbedarf, geringere Anlagenkosten, vor allem aber ein geringerer Primär-Energieverbrauch. Bei einer elektrisch betriebenen Kompressions-Wärmepumpe ist z. B. zu berücksichtigen, daß bis zur Stromerzeugung etwa 2/3 der Primärenergie verlorengegangen sind.

Stoffpaare für Sorptions-Wärmepumpen, bestehend aus einem Lösungsmittel und einem flüchtigen zu lösenden Stoff, sind bereits bekannt. Solche Stoffpaare wurden zunächst für den Einsatz in großtechnischen Kältemaschinen entwickelt (Wasser/Ammoniak; Lithiumbromid/Wasser). Für private Haushalte ist allerdings der Einsatz von Ammoniak aus toxikologischen und sicherheitstechnischen Gründen eingeschränkt. Kombinationen mit Lithiumbromid erfordern einen hohen Aufwand bezüglich Dichtheit, da die Anlagen in hohem Vakuum arbeiten.

Außerdem ist die Kristallisationsgrenze bei niedrigen Temperaturen der Wärmequelle zu beachten.

Für den Einsatz in kleineren Systemen, insbesondere in privaten Haushalten, wurden Systeme vorgeschlagen, die einen Fluorchlorkohlenwasserstoff als flüchtige Phase enthalten, da diese Stoffgruppe unbrennbar und vergleichsweise nicht toxisch und nicht korrosiv ist.

Arbeitsstoffpaare für Sorptions-Wärmepumpen, in denen das Lösungsmittel ein Phosphorsäureamid mit Alkyl- oder Phenylgruppen ist und die flüchtige Phase ein Fluorchloralkan darstellt, sind Gegenstand der DE-OS 29 44 189.

Als derzeitig günstigstes System eines Fluorchlorkohlenwasserstoffes mit einem Lösemittel wird in der Fachliteratur die Kombination von FKW 22 (Difluorchlormethan) mit Tetraethylenglykol-dimethylether angesehen (B. Eisemann, Absorption refrigeration, ASHRAE Journal, Dez. 1959, S. 45−50; S. Mastrangelo, Chlorofluorohydrocarbons in tetraethylene glyco dimethyl ether, ASHRAE Journal, Okt. 1959, S. 64−67; K. Stephan, D. Seher, Arbeitsgemische für Sorptions-Wärmepumpen, Klima-Kälte-Heizung 1/1980, Seiten 874, 875).

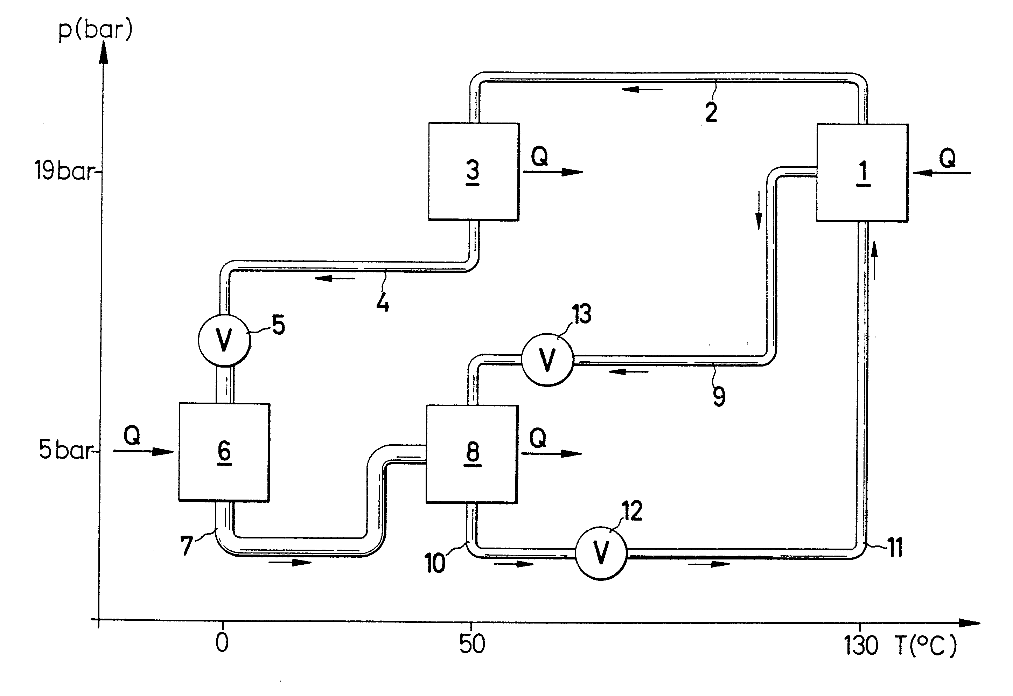

Figur 1 zeigt stark vereinfacht einen Absorptions-Wärmepumpen-Kreisprozeß. Der Wärmefluß in das System und aus dem System wird mit Q bezeichnet und durch die Pfeilrichtung angegeben.

Die Funktionsweise ist wie folgt: Im Verdampfer (6) wird durch Wärmeaufnahme, bei niedriger Temperatur (z. B. 0°C) das Kältemittel (z. B. FKW 22) verdampft. Der Kältemitteldampf gelangt über Leitung (7) in den Absorber (8) und löst sich dort im Lösemittel. Dabei wird Wärme frei, die z. B. an einen zu heizenden Wasserkreislauf abgegeben werden kann. Das mit Kältemittel angereicherte Lösemittel (reiche Lösung) wird über Leitungen (10) und (11) mit einer Pumpe (12) in den Austreiber (1) gepumpt. Der Austreiber (1) wird beheizt (z. B. bei 130°C), wodurch Kältemittel aus der Lösung desorbiert und über Leitung (2) in den Verflüssiger (3) gelangt. Im Verflüssiger (3) wird der Kältemitteldampf bei höherer Temperatur, z. B. 50°C, verflüssigt. Die dabei frei werdende Verdampfungswärme kann z. B. an einen zu heizenden Wasserkreislauf abgegeben werden. Sinnvollerweise wird die Wärmepumpe so betrieben, daß die Wärmeabgabe des Verflüssigers und des Absorbers bei gleicher Temperatur erfolgt (z. B. 50°C).

Vom Verflüssiger (3) gelangt das flüssige Kältemittel über Leitung (4) und das Expansionsventil (5) wieder in den Verdampfer (6).

Die im Austreiber (1) durch Desorption von Kältemittel an Kältemittel verarmte Lösung (arme Lösung) gelangt über Leitung (9) und Drosselventil (13) zurück in den Absorber (8) und kann dort wieder Kältemitteldampf aus dem Verdampfer (6) lösen.

Der Wärmepumpen-Kreisprozeß erfolgt zwischen zwei Druckniveaus. Der Druck der Niederdruckseite (nach Expansionsventil, Verdampfer, Absorber bis Lösungspumpe) resultiert aus dem Sättigungsdampfdruck des Kältemittels bei der Verdampfungstemperatur. Zum Beispiel FKW 22 besitzt bei 0°C einen Sättigungsdampfdruck von 5 bar. Der Druck der Hochdruckseite (ab Lösungspumpen-Austritt, Austreiber, Verflüssiger bis Expansionsventil) resultiert aus dem Sättigungsdampfdruck des Kältemittels bei der Verflüssigungstemperatur. Zum Beispiel FKW 22 besitzt bei 50°C einen Sättigungsdampfdruck von 19 bar.

Es liegt auf der Hand, daß pro kg Lösemittel um so mehr Wärme in der Anlage transportiert werden kann, je größer die Differenz zwischen den Löslichkeiten des Kältemittels im Absorber und Austreiber ist. Diese Löslichkeitsdifferenz in kg Kältemittel pro kg Lösemittel wird als Entgasungsbreite bezeichnet. Multipliziert man die Entgasungsbreite mit der Verdampfungswärme des Kältemittels (FKW 22 besitzt bei 50°C eine Verdampfungswärme von 154 kJ pro kg, so erhält man die pro kg Lösemittel transportierbare Wärmemenge.

**0 084 869**

Für das in der Literatur beschriebene System FKW 22/Tetraethylenglykoldimethylether beträgt, nach eigenen Versuchen, die Entgasungsbreite 0,19 kg FKW 22 pro kg Lösemittel. Die Messung wurde unter folgenden Bedingungen vorgenommen: Verdampfer/Absorber-Teil: 5 bar Dampfdruck von FKW 22 und 50° C Lösungstemperatur. Austreiber-/Kondensator-Teil: 19 bar Dampfdruck von FKW 22 und 130° C Lösungstemperatur.

Die transportierbare Wärmemenge beträgt demnach 29,3 kJ/kg Lösemittel.

Der Erfindung liegt die Aufgabe zugrunde, ein Arbeitsstoffpaar zu schaffen, das pro Gewichtseinheit des Lösemittels eine erheblich höhere Wärmemenge transportiert, aber die übrigen Anforderungen an ein solches System ebenfalls erfüllt. Beispielsweise soll das System im Arbeitsbereich niedrige Viskosität aufweisen und nicht korrosiv sein. Es soll möglich sein, der Umgebung bei −20° C Wärme zu entziehen. Die flüchtige Verbindung soll aus dem Lösungsmittel bei Temperaturen von 90° C bis 180° C ausgetrieben werden können.

Es wurde nun gefunden, daß das Stoffpaar Difluorchlormethan (FKW 22)/Triethylenglykol-dimethyläther (TÄG) diese Anforderungen erfüllt. Die Entgasungsbreite dieses Systems ist um etwa 50% größer als beim System FKW 22/Tetraethylenglykol-dimethyläther. Die Wärmemenge, die pro kg Lösemittel transportiert werden kann, beträgt daher im vorliegenden Fall ca. 46,2 kJ/kg Lösemittel. Es ist weiterhin vorteilhaft, daß das Lösemittel TÄG bei 20° C eine Viskosität von nur 3,0 mPa·s besitzt, während Tetraethylenglycol-dimethyläther eine Viskosität von 5,1 mPa·s aufweist. Die mit dem erfindungsgemäßen Stoffpaar gefüllten Sorptions-Wärmepumpen können sowohl als Kältemaschine oder als Heizwärmepumpe betrieben werden.

Der Einsatz des erfindungsgemäßen Stoffpaares ist in gewissen Temperaturbereichen möglich. Die Temperaturbereiche für verschiedene Anlagenteile werden nachfolgend aufgeführt.

1.  Verdampfer:

    Die Verdampfung kann im Bereich von −20° C bis +40° C erfolgen, vorzugsweise im Bereich −10° C bis +20° C, insbesondere im Bereich −5° C bis +10° C.

2.  Kondensation:

    Die Kondensation kann im Bereich von 20° C bis 80° C erfolgen, vorzugsweise zwischen 35° C und 65° C.

3.  Absorber:

    Die Absorption kann bei Temperaturen zwischen 20° C und 80° C erfolgen, vorzugsweise zwischen 35° C und 65° C.

4.  Austreiber:

    Das Austreiben von FKW 22 aus der Lösung kann zwischen 90° C und 180° C erfolgen, vorzugsweise zwischen 110° C und 150° C.

Die Lage der Mittelpunkte der Anlagenteile 1 (Austreiber), 3 (Verflüssiger), 6 (Verdampfer) und 8 (Absorber) bezüglich des gezeichneten Koordinatensystems von Figur 1 veranschaulicht gleichzeitig bevorzugte Arbeitsbedingungen für eine Wärmepumpe mit dem erfindungsgemäßen Arbeitsmedium.

Unter den bereits genannten Bedingungen im Verdampfer/Absorber-Teil und Austreiber/Kondensator-Teil, besitzt FKW 22 in TÄG und vergleichsweise in Tetraethylenglykoldimethylether folgende Löslichkeiten.

|  | Triäthylenglykol-dimethyläther (TÄG) | Tetraäthylenglykol-dimethyläther (E 181) |
|---|---|---|
| Verdampfer/Absorber-Teil | 0,61 kg/kg | 0,53 kg/kg |
| Austreiber/Kondensator-Teil | 0,31 kg/kg | 0,34 kg/kg |
| Entgasungsbreite | 0,3 kg/kg | 0,19 kg/kg |

3

Es ist überraschend, daß das erfindungsgemäße System, enthaltend TÄG, einen Vorteil aufweist gegenüber dem analogen System auf Basis von Tetraethylenglycoldimethyläther. Es ist aus der US-PS 20 40 901 bekannt, daß beide Äther gute Lösungsmittel für FKW 21 darstellen. In der gleichen Literaturstelle wird jedoch ausgeführt, daß aus den Löslichkeitseigenschaften eines bestimmten Halogenderivats des Methans keine Schlüsse gezogen werden können bezüglich der Löslichkeitseigenschaften eines anderen Halogenderivats des Methans. Je niedriger die Temperatur im Absorber ist, um so höher ist die erreichte Beladung des TÄG mit FKW 22. Je höher die Temperatur im Austreiber ist, um so geringer ist die Restbeladung. Das Mischungsverhältnis TÄG/FKW 22 hängt also von den Arbeitsbedingungen ab. In den meisten Fällen beträgt der Gewichtsanteil FKW 22  10−75%, vorzugsweise 20−40%.

## Patentansprüche

1. Arbeitsmedium zur Verwendung in Sorptions-Wärmepumpen, bestehend aus dem Kältemittel Difluorchlormethan (FKW 22) und einem Absorptionsmittel, dadurch gekennzeichnet, daß das Absorptionsmittel Triethylenglycoldimethyläther ist.

2. Verwendung des Stoffpaares gemäß Anspruch 1 in einer Sorptions-Wärmepumpe, die als Kältemaschine oder als Heizwärmepumpe betrieben wird.

3. Verfahren zum Wärmetransport mittels einer Absorptionswärmepumpe, die einen Verdampfer, einen Absorber, einen Austreiber und einen Verflüssiger enthält, wobei im Verdampfer bei Temperaturen von −20 bis +40°C flüssiges Difluorchlormethan unter Wärmeaufnahme verdampft, der entstandene Dampf in den Absorber geführt und dort bei 20 bis 80°C in einem organischen Lösemittel gelöst wird, die beim Lösevorgang auftretende Wärme aus dem Absorber mindestens teilweise abgeführt wird, das entstehende Difluorchlormethan/Lösemittel-Gemisch in den Austreiber gepumpt wird, dort auf 90 bis 180°C aufgeheizt wird, so daß Difluorchlormethan aus der Lösung mindestens teilweise ausgetrieben wird, das ausgetriebene gasförmige Difluorchlormethan in den Verflüssiger geführt wird, dort wie im Absorber bei Temperaturen von 20 bis 80°C, jedoch bei einer Temperatur, die über der Temperatur im Verdampfer liegt, verflüssigt wird, die dabei auftretende Verdampfungswärme abgegeben wird, das flüssige Difluorchlormethan wieder in den Verdampfer zurückgeführt wird, die im Austreiber durch Austreiben von Difluorchlormethan entstandene, an Difluorchlormethan verarmte Lösung wieder in den Absorber zurückgeführt wird, dadurch gekennzeichnet, daß als organisches Lösemittel Triethylenglykoldimethyläther eingesetzt wird.

## Claims

1. A working medium for use in sorption heat pumps and comprising the refrigerant difluorochloromethane (R-22) and an adsorbent, in which the adsorbent is triethylene glykol dimethyl ether.

2. The use of the pair of materials as claimed in claim 1, in a sorption heat pump which is operated as a refrigerator or as a thermal energy pump.

3. A process for transporting heat by means of an absorption heat pump which contains an evaporator, an absorber, a generator and a condenser, in which liquid difluorochloromethane absorbs heat and evaporates in the evaporator at temperatures of −20 to +40°C, the vapor formed is passed into the absorber and dissolved there at 20 to 80°C in an organic solvent, at least some of the heat which arises in the dissolving step is conducted away from the absorber, the resulting difluorochloromethane/solvent mixture is pumped into the generator and heated up there to 90 to 180°C, so that at least some of the difluorochloromethane is expelled from the solution, the expelled gaseous difluorochloromethane is passed into the condenser and condensed there at temperatures of 20 to 80°C, as in the absorber, but at a temperature which is above the temperature in the evaporator, the heat of vaporization which arises in this step is given off, the liquid difluorochloromethane is returned to the evaporator, and the solution depleted in difluorochloromethane in the generator by expelling difluorochloromethane is returned to the absorber, which comprises using triethylene glycol dimethyl ether as the organic solvent.

## Revendications

1. Fluide de travail pour utilisation dans des pompes à chaleur à sorption, constitué du fluide frigorigène difluorochlorométhane (FKW 22) et d'un absorbant, caractérisé en ce que l'absorbant est l'éther diméthylique du triéthylèneglycol.

2. Utilisation du couple de substances selon la revendication 1 dans une pompe à chaleur à sorption exploitée en tant que machine frigorifique ou en tant que pompe à chaleur de chauffage.

3. Procédé pour le transport de chaleur au moyen d'une pompe à chaleur à absorption, qui contient un évaporateur, un absorbeur, un extracteur et un liquéfacteur, où du difluorochlorométhane liquide est évaporé dans l'évaporateur par absorption de chaleur à des températures de —20 à +40°C, la vapeur produite est envoyée dans l'absorbeur et y est dissoute à 20 à 80°C dans un solvant organique, la chaleur produite lors de la dissolution est évacuée de l'absorbeur au moins partiellement, le mélange obtenu de difluorochlorométhane et de solvant est transvasé par pompage dans l'extracteur, y est chauffé à 90 à 180°C de façon que le difluorochlorométhane soit au moins partiellement extrait de la solution, le difluorochlorométhane gazeux extrait est envoyé dans le liquéfacteur, y est liquéfié comme dans l'absorbeur à des températures à 20 à 80°C mais à une température supérieure à la température régnant dans l'évaporateur, la chaleur de vaporisation qui se forme alors est cédée, le difluorochlorométhane liquide est renvoyé dans l'évaporateur, la solution appauvrie en difluorochlorométhane produite dans l'extracteur par extraction du difluorochlorométhane est renvoyée dans l'absorbeur, caractérisé en ce qu'on utilise en tant que solvant organique l'éther diméthylique du triéthylèneglycol.